Europäisches Patentamt

European Patent Office

Office européen des brevets

(19)

(11) Publication number: **0 011 357**
**A1**

(12)

# EUROPEAN PATENT APPLICATION

(21) Application number: **79301925.8**

(22) Date of filing: **18.09.79**

(51) Int. Cl.³: **C 09 K 5/06**
**F 24 J 3/00**

(30) Priority: **29.09.78 GB 3864678**

(43) Date of publication of application:
**28.05.80 Bulletin 80 11**

(84) Designated Contracting States:
**AT BE CH DE FR IT LU NL SE**

(71) Applicant: **NATIONAL RESEARCH DEVELOPMENT
CORPORATION
P.O. Box 236 Kingsgate House 66-74 Victoria Street
London SW1E 6SL(GB)**

(72) Inventor: **Randell, John Edward
4 Heald Drive Bowdon
Altrincham Cheshire(GB)**

(72) Inventor: **Heal, Gerald Roger
4 Hazelbadge Close Poynton
Stockport Cheshire(GB)**

(74) Representative: **Neville, Peter Warwick
Patent Department National Research Development
Corporation P.O. Box 236, Kingsgate House 66-74
Victoria Street
London SW1E 6SL(GB)**

(54) The use of a collocation containing hydrates to store heat at a steady temperature, and a heat storage device containing this collocation.

(57) Heat is stored at a steady temperature (about 29°C) using calcium chloride hexahydrate and up to 20 percent strontium chloride hexahydrate to assist crystallisation. This heat storage medium is placed in a heat storage device comprising means to seal the medium from water vapour.

EP 0 011 357 A1

Croydon Printing Company Ltd.

STORING HEAT AT A STEADY TEMPERATURE
(CLAIMS IN DIFFERENT CATEGORIES)

This invention relates to a way of storing heat at a steady (including a nearly steady) temperature.

Water is a popular medium for storing heat (for example for central heating systems) but, while it remains a liquid, its temperature varies according to the heat energy stored in it. This is inconvenient for those systems which rely on a steady-temperature reservoir to or from which heat is transferred.

British Patent No. 1396293 suggests that the steady-temperature reservoir may be a freezable fluid such as water. Heat can be stored in/withdrawn from this reservoir as latent heat of fusion/freezing, without affecting the temperature of the reservoir. However, the water/ice transformation occurs at too low a temperature for many purposes, and British Patent No. 1396292 suggests the use of crystallisable hydrates (such as trisodium orthophosphate dodecahydrate). Because this hydrate at its 'melting' temperature does not all dissolve in its own water of crystallisation, water must in practice be added to obtain a clear solution. As a result of the added water, the hydrate crystallises over a temperature range, which is undesirable, and moreover melts at about $75^{o}$C, too high for many purposes.

Experiments with salts showing a sharp crystallisation temperature have shown that supercooling is often a problem, and

0011357

that to prevent this by adding seed particles of a foreign substance is often effective for only a limited number of melting/freezing cycles.

This invention is the use of a collocation of calcium chloride hexahydrate and up to 20 per cent strontium chloride hexahydrate to store heat at a steady temperature (about 29$^o$C).

This invention also consists in a heat storage device containing, as the heat storage medium, a collocation of calcium chloride hexahydrate and up to 20 per cent strontium chloride hexahydrate, or a precursor or precursors of this medium, the device having means to seal the medium from water vapour; the device may further have means for putting the medium into thermal communication selectively with a heat source and a heat sink. The amount of water present in the medium (or precursor(s)) may deviate by up to 20% either way of the exact amount necessary for the hexahydrates. Calcium chloride hexahydrate 'melts' at about 29$^o$C and the whole of the calcium chloride dissolves in the water of crystallisation released, leaving a clear solution (congruent melting). This avoids a disadvantageous layering effect and the need for thickening of the solution.

The melted solution is preferably saturated in strontium chloride, especially at immediately above the said steady temperature, with some strontium chloride hexahydrate left over as solid. The proportion of strontium chloride hexahydrate by weight thus is preferably at least 0.1%, more preferably at

1357

- 3 -

least 0.4%, usefully at least 0.9%, and may be up to 10%,
preferably up to 5%, more preferably up to 2%, most preferably
up to 1½%. The best proportion may be dependent on the shape of
the container for the heat storage medium, and on whether
nucleation assistants such as seeding rods are provided.

The heat storage medium should not be heated above 60 to 65°C,
since this may induce subsequent supercooling. It is tentatively
suggested that this is connected with the transition strontium
chloride hexahydrate - strontium chloride dihydrate at about 60°C.
The medium, if supercooled following such overheating, can be
made to crystallise, by agitating it, whereafter it again behaves
normally, displaying no supercooling.

The medium may be compounded by collocating the required
proportions of the mentioned compounds, or less-hydrated forms
of the compounds plus water, or different compounds (for example,
some other strontium salt instead of strontium chloride) which
will form the above compounds in situ. Such precursors amount
in reality to the above compounds; see Beecham Group v Bristol
Laboratories (House of Lords, reported at page 215 of the Fleet
Street Law Reports, 1977).

The purity of the compounds is not critical, but there must
not be so much insoluble impurity that the strontium chloride is
physically covered. Thus it would be possible to use industrial-
waste grade calcium chloride which has been subjected to a simple

- 4 -

melting and settling (or filtration) treatment to remove the worst of the insolubles.

The heat storage method and device of the invention can be used for example in connection with the termal storage arrangements disclosed in UK Specifications 1396293, 1497042 and 1540835.

In an experiment illustrating the invention, 3g $SrCl_2.6H_2O$ were mixed with 297g $CaCl_2.6H_2O$ premelted at $40^{\circ}C$ in a 250 ml cylindrical glass bottle (height/diameter = 2 : 1), thus leaving some air space. The bottle was then sealed, particularly to prevent ingress of water. The chemicals were of 'general purpose' purity, and gave the same results as chemicals of 'analytical grade' purity. Heating at $40^{\circ}C$ for 6 hours was followed by cooling the vessel to $25^{\circ}C$ in a thermostatically controlled water bath, for 6 hours. This was repeated continuously for 120 days (i.e. 240 cycles). On cooling, the vessel reached $29^{\circ}C$ in about 10 minutes, and then gave off heat at that temperature until 'freezing' (crystallisation) was completed in 3 to 4 hours. No supercooling was observed at any time, with crystallisation occurring at $20^{\circ}C$ each cycle. The vessel thereafter cooled to $25^{\circ}C$ about 6 hours from the start of the cooling. On heating, there was congruent melting (the whole of the calcium chloride dissolving in the water of crystallisation released, leaving a clear solution) at $29^{\circ}C$; the melting was complete in about $1\frac{1}{2}$ hours.

If, instead of a water bath, air is used as the heat source/ heat sink, glass bottles may be liable to crack. Therefore plastics containers are recommended.

In further experiments, the above procedure was tried using 0.1g $SrCl_2.6H_2O$ plus 99.9g $CaCl_2.6H_2O$. At first there was negligible supercooling, but upon repeated cycling, crystallisation became less reliable in that bottle.

In another experiment illustrating the invention, $CaCl_2.6H_2O$ was heated to form a liquid solution at $40^\circ C$ and introduced into a hollow plastics sphere of 45 mm diameter, leaving about 4 $cm^3$ air space. A measured small volume of a saturated solution of strontium nitrate in hot water was injected and formed a cloudy precipitate of strontium chloride hexahydrate equivalent to $\frac{1}{2}\%$ of the $CaCl_2.6H_2O$. Strontium chloride hexahydrate in such a finely divided form is preferable since it may provide more sites for nucleating crystallisation of the calcium chloride. On thermal cycling of this collocation in the same way as above, crystallisation occurred at $29^\circ C$ without supercooling.

Because the specific density of solid $CaCl_2.6H_2O$ at $25^\circ C$ is 1.71 and of 'liquid' $CaCl_2.6H_2O$ at $40^\circ C$ is 1.51, a vessel being filled with the solid should be left with about 15-20% air space to allow for expansion, while a vessel being filled with the 'liquid' need be left with none, but, to avoid collapse, is preferably left with about 10%.

## CLAIMS

1. The use of a collocation of calcium chloride hexahydrate and up to 20 percent strontium chloride hexahydrate to store heat at a steady temperature.

2. The use of Claim 1, wherein the collocation contains more than sufficient strontium chloride hexahydrate to saturate the (liquified) calcium chloride hexahydrate immediately above the said steady temperature.

3. The use of Claim 2, wherein the collocation contains at least 0.1% strontium chloride hexahydrate.

4. The use of Claim 3, wherein the collocation contains at least 0.4% strontium chloride hexahydrate.

5. The use of Claim 4, wherein the collocation contains at least 0.9% strontium chloride hexahydrate.

6. The use of any preceding claim, wherein the collocation contains up to 10% strontium chloride hexahydrate.

7. The use of Claim 6, wherein the collocation contains up to 2% strontium chloride hexahydrate.

8. A heat storage device containing, as the heat storage medium, the collocation defined in any one of Claims 1 to 7, the device further comprising the means to seal the medium from water vapour.

9. The heat storage device of Claim 8, further comprising means for putting the medium into thermal communication selectively with a heat source and a heat sink.

10. The heat storage device of Claim 8 or 9, wherein the strontium chloride hexahydrate is present in finely divided form.

0011357

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | CHEMICAL ABSTRACTS, vol. 88, 1978, page 122, no. 138621b Columbus, Ohio, U.S.A. <br><br> & SU - A - 568 669 (KRASNODAR POLY-TECHNIC INSTITUTE) 15-08-1977 <br> * Abstract * <br><br>-- | 1,3,4, 5 | C 09 K 5/06 <br> F 24 J 3/00 |
| A | DE - A - 2 550 106 (HITACHI) <br> * Claims 1,2,3 * <br><br>-- | 1 | |
| A | CHEMICAL ABSTRACTS, vol. 86, 1977, page 182, no. 19533y Columbus, Ohio, U.S.A. <br><br> & JP - A - 76 76183 (MITSUBISHI ELECTRIC CORP.) 1-07-1976 <br> * Abstract * <br><br>-- | 1 | **TECHNICAL FIELDS SEARCHED (Int.Cl.³)** <br><br> C 09 K 5/06 <br> F 24 J 3/00 |
| A,P | GB - A - 2 001 096 (PHILIPS) <br> * Claims 1,4 * <br><br>---- | 1 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 15-11-1979 | NICOLAS |

EPO Form 1503.1 06.78